# EUROPÄISCHE PATENTANMELDUNG

(11) **EP 3 620 869 A1**
(43) Veröffentlichungstag der Anmeldung: **11.03.2020**
(21) Anmeldenummer: 18193332.6
(22) Anmeldetag: 10.09.2018
(51) Int. Cl.: G05B 19/042, H04L 12/40, H04L 29/06

(54) **VERFAHREN UND UMSETZUNGSKOMPONENTE FÜR DEN DATENAUSTAUSCH ZWISCHEN ZWEI SYSTEMEN MIT VERSCHIEDENEN SICHERHEITSKONZEPTEN FÜR FUNKTIONALE SICHERHEIT**

(71) Anmelder: Siemens Aktiengesellschaft, 80333 München (DE)
(72) Erfinder: Hubert, Johannes, 90559 Burgthann (DE); Metz, Christian, 90402 Nürnberg (DE); Meyer, Thomas Markus, 90475 Nürnberg (DE)

(57) **Zusammenfassung**

Verfahren und Umsetzungskomponente zum Datenaustausch zwischen zwei Systemen (SK_1, SK_2) mit verschiedenen Sicherheitskonzepten für eine funktionale Sicherheit, wobei in einem ersten und in einem zweiten der Systeme (SK_1 bzw. SK_2) zur Codierung von Daten eine erste bzw. zweite Codiervorschrift (CV_A bzw. CV_B) verwendet wird. Dabei wird für den Datenaustausch eine Umsetzungskomponente (UC) vorgesehen, wobei mittels der Umsetzungskomponente (UC) die mittels der ersten Codiervorschrift (CV_A) codierten Daten vor einer Übermittlung von dem ersten System (SK_1) zu dem zweiten System (SK_2) in eine Darstellung gemäß der zweiten Codiervorschrift (CV B) umcodiert werden, und umgekehrt. Durch dieses Verfahren bzw. diese Umsetzungskomponente ist es möglich, mehrere Sicherheitskonzepte auf einem Prozessor, einem Gerät oder einer Automatisierungskomponente auszuführen und miteinander interagieren zu lassen. Dabei kann die Kompatibilität zwischen den verschiedenen Konzepten gewährleistet werden, wobei bereits abgenommene oder zertifizierte Funktionen erhalten bleiben und nicht neu zertifiziert werden müssen.

## Beschreibung

Die Erfindung betrifft ein Verfahren zum Datenaustausch zwischen zwei Systemen mit verschiedenen Sicherheitskonzepten für funktionale Sicherheit gemäß dem Patentanspruch 1, und eine Umsetzungskomponente für einen Datenaustausch zwischen zwei Systemen mit verschiedenen Sicherheitskonzepten für funktionale Sicherheit gemäß dem Oberbegriff des Patentanspruchs 11.

Für Computer und allgemein Steuerungen (bspw. speicherprogrammierbare Steuerungen) in sicherheitstechnisch kritischen Bereichen müssen erhöhte Sicherheitsanforderungen wie funktionale Sicherheit eingehalten werden. Einschlägige Normen sind hier die IEC 61508 und andere implementierende Normen wie bspw. die IEC 61511 für die Prozessindustrie.

Vereinfacht gesagt, geht es bei der funktionalen Sicherheit für sicherheitskritische Anlagen wie Aufzugssteuerungen, prozesstechnische Anlagen, Sicherheitssysteme für Fahrzeuge und Flugzeuge darum, dass auftretende Fehler bei der Verarbeitung von Daten, Prozesswerten etc. erkannt werden, so dass ein sicherheitskritisches System beim Auftreten eines Fehlers sofort in einen sicheren Zustand überführt werden kann oder bspw. andere Maßnahmen ergriffen werden können.

Einfache Fehler, also bspw. einzelne Bitfehler, bei denen auf einem Datenbus oder in einem Datum eben nur ein einzelnes Bit fehlerhaft wiedergegeben wird, können oft bereits mit einfachen Mitteln wie bspw. einer Paritätsbitüberprüfung, Checksummen und dergl. festgestellt werden. Für sicherheitskritische Anlagen reichen solche Überprüfungen jedoch nicht aus. Bei den hier beschriebenen und betroffenen Anwendungsfällen werden die Werte, Parameter oder allgemein Daten in den datenverarbeitenden Systemen daher regelmäßig mittels einer Codierungsvorschrift umcodiert, wobei zumeist aus einer kleineren Bitfolge eine größere Bitfolge erzeugt wird, wobei die Wahrscheinlichkeit, dass aufgrund eines Fehler-Szenarios ein anderes Datenwort entsteht, welches fälschlicherweise als gültig erkannt wird, besonders klein ist. Man spricht bspw. von einer vergrößerten Hamming-Distanz. Das Prinzip, bei dem Daten nicht als "normales" Binärmuster verarbeitet werden, sondern in einer codierten Variante, wird in der Literatur oft auch als "coded processing" bezeichnet.

Es sind fast unbegrenzt viele unterschiedliche Codierungsverfahren und Codierungsparameter denkbar, um konventionell codierte Daten (bspw. binäre Datenwörter) so zu codieren, dass Fehler bei der Datenverarbeitung sicherer erkannt werden können. Von diesen verschiedenen Codierungsvorschriften haben sich einige am Markt durchgesetzt, wobei oft einzelne Hersteller sicherheitsgerichteter Technik jeweils einige wenige Codierungsvorschriften verwenden, während andere Hersteller eben andere Codiervorschriften einsetzen. Es haben sich auch einige spezielle Codiervorschriften für bestimmte Anwendungsgebiete etabliert, bspw. für die Bahntechnik, die Kraftwerkstechnologie, den Automotive-Sektor usw.

Nach heutigem Stand ist es nicht einfach möglich, zwei unterschiedliche Sicherheitskonzepte zur Erfüllung der jeweils benötigten Sicherheitsanforderungen, speziell funktionale Sicherheit nach Safety-Normen, wie IEC 61508, zusammen arbeiten zu lassen. Dies betrifft, wie bereits erwähnt, bspw. die sicherheitsgerichtete Bahntechnik, die mit eigenen Normen und Sicherheitsanforderungen nicht ohne weiteres mit sicherheitsgerichteter Automatisierungstechnik nach IEC 61508 zusammen arbeiten kann. Es gibt dabei also keine Entkopplung mehrerer einzelner Konzepte, bspw. für öffentliche Schnittstellen.

Eine provisorische Lösung des Problems mag darin bestehen, dass die sicherheitsgerichteten Anlagenteile, die nach unterschiedlichen Codierungsvorschriften oder Normen arbeiten, an ihren Außenschnittstellen, also für die Zusammenarbeit mit anderen Systemen, die Daten uncodiert austauschen. Darin liegt jedoch auch eine Schwachstelle, denn gerade die Schnittstellen und somit die Datenübertragung zwischen einzelnen Systemen ist besonders anfällig für Störungen, bspw. durch Überspannungsereignisse und andere elektromagnetische Störungen, Kurzschlüsse auf Datenleitungen, Unterbrechungen von Datenleitungen etc.

Es ist daher eine Aufgabe der vorliegenden Erfindung, die Zusammenarbeit oder das Zusammenwirken von Systemen mit unterschiedlichen Sicherheitskonzepten zu verbessern.

Es ist eine Kernidee zur erfindungsgemäßen Lösung dieser Aufgabe, die bestehenden, einzelnen Komponenten mit ihren jeweils eigenen Sicherheitskonzepten und vor allen Dingen Codierungsvorschriften unverändert weiter zu betreiben, jedoch für den Datenaustausch zwischen diesen Systemen eine Komponente, also bspw. ein Programmbaustein oder einen Proxy-Server oder dergl., zwischenzuschalten, wobei diese zwischengeschaltete Komponente, im Folgenden auch Umsetzungskomponente genannt, eine direkte Umcodierung der auszutauschenden Daten von dem Sicherheitskonzept und speziell der Codiervorschrift des die Daten sendenden Systems in das Sicherheitskonzept und speziell die Codierungsvorschrift des die Daten empfangenden Systems zu bewerkstelligen.

Die Aufgabe wird insbesondere durch das Verfahren gemäß Patentanspruch 1 und durch die Umsetzungskomponente gemäß Patentanspruch 11 gelöst.

Dabei ist ein Verfahren zum Datenaustausch zwischen zwei Systemen mit verschiedenen Sicherheitskonzepten für funktionale Sicherheit vorgesehen, wobei in einem ersten der Systeme zur Codierung von Daten eine erste Codiervorschrift verwendet wird, und wobei in einem zweiten der Systeme zur Codierung der Daten eine zweite Codiervorschrift verwendet wird. Dabei wird für den Datenaustausch zwischen dem ersten und dem zweiten System eine Umsetzungskomponente vorgesehen, wobei mittels der Umsetzungskomponente die mittels der ersten Codiervorschrift codierten Daten vor einer Übermittlung von dem ersten System zu dem zweiten System in eine Darstellung gemäß der zweiten Codiervorschrift umcodiert werden, und umgekehrt. Durch dieses Verfahren ist es möglich, mehrere Sicherheitskonzepte auf einem Prozessor, einem Gerät oder einer Automatisierungskomponente auszuführen und miteinander interagieren zu lassen. Dabei kann die Kompatibilität zwischen den verschiedenen Konzepten gewährleistet werden, wobei bereits abgenommene oder zertifizierte Funktionen erhalten bleiben und nicht neu zertifiziert werden müssen. Durch die dabei entstehende Entkopplung zwischen den verschiedenen Systemen ist kein gegenseitiges "Wissen" in den einzelnen Systemen notwendig, zudem können einzelne Systeme weiterentwickelt werden, ohne dass es eine Rückwirkung auf andere, damit verbundene Systeme gibt. Schließlich ist es auch möglich, mit bereits vorhandenen sicherheitstechnisch bewährten Geräten und Funktionen andere Anwendungsgebiete zu bereichern, die ein anderes Sicherheitskonzept und insbesondere andere Codiervorschriften und für das "coded processing" verwenden. Etwaige Zertifizierungen der beteiligten Komponenten werden nicht ungültig.

Die Aufgabe wird außerdem durch eine Umsetzungskomponente zum Datenaustausch zwischen zwei Systemen mit verschiedenen Sicherheitskonzepten für die funktionale Sicherheit gelöst, wobei in einem ersten der Systeme zur Codierung von Daten eine erste Codiervorschrift verwendet wird, und wobei in einem zweiten der Systeme zur Codierung der Daten eine zweite Codiervorschrift verwendet wird. Dabei ist für den Datenaustausch zwischen dem ersten und dem zweiten System eine Umsetzungskomponente vorgesehen, wobei mittels der Umsetzungskomponente die mittels der ersten Codiervorschrift codierten Daten vor einer Übermittlung von dem ersten System zu dem zweiten System in eine Darstellung gemäß der zweiten Codiervorschrift umcodiert werden, und umgekehrt. Mit dieser Umsetzungskomponente können die Vorteile realisiert werden, die bereits anhand des Verfahrens diskutiert wurden.

Vorteilhafte Ausgestaltungen der Erfindung sind in den abhängigen Patentansprüchen angegeben. Die Merkmale und Vorteile gelten gleichermaßen für das erfindungsgemäße Verfahren und die erfindungsgemäße Vorrichtung, also die erfindungsgemäße Umsetzungskomponente. Die einzelnen vorteilhaften Ausgestaltungen können sowohl einzeln, als auch in sinnvoller Kombination miteinander realisiert werden. Insbesondere in größeren, verteilten Anlagen können an verschiedenen Stellen auch verschiedene Ausgestaltungen der Erfindung eingesetzt werden.

In einer Variante kann die Umsetzungskomponente als ein Software-Baustein auf einem der Systeme installiert sein. Dies bietet sich insbesondere bei den speicherprogrammierbaren Steuerungen an, die es ermöglichen, verschiedene Programm-Bausteine unabhängig voneinander auf ein - und derselben Hardware-Plattform zu betreiben. Besonders vorteilhaft ist diese Variante in den Fällen, in denen auf ein- und derselben Hardware-Plattform ohnehin bereits unterschiedliche Anwendungen mit unterschiedlichen Sicherheitskonzepten parallel installiert sind.

In einer weiteren vorteilhaften Variante ist die Umsetzungskomponente als ein separater Geräte-Block, bspw. als ein separater Proxy-Server oder aber als eine Server-Instanz auf einem beliebigen anderen Gerät in einem Netzwerk realisiert. Insbesondere bei dieser Ausführungsform ist es möglich, dass die so realisierte Umsetzungskomponente als eine Art Dienstleister oder allgemein als "Umsetzungsdienst" die reibungslose Zusammenarbeit zwischen den unterschiedlichsten sicherheitstechnischen Komponenten eines größeren Netzwerks zur Verfügung stellt.

In einer weiteren Variante ist es möglich, dass die Umsetzungskomponente in der Netzwerktechnik, bspw. in einem Router, einem Switch oder einem Gateway, integriert ist, womit es möglich ist, Netzsegmente miteinander zu verbinden, die unterschiedliche Codierungsvorschriften und unterschiedlichen Sicherheitsanforderungen genügen. Bspw. kann ein PROFIsafe-Netzwerk mit einem anderen Netzwerk funktional zusammengeschaltet werden, ohne auf die Vorteile der sicherheitsgerichteten Codierung der Daten jeweils verzichten zu müssen.

In einer Variante der Erfindung ist die Umsetzungskomponente selbst ein in sich geschlossener und zertifizierter und gegen Manipulation geschützter Baustein, insbesondere ein sicherheitsgerichteter Programm-Baustein, der bspw. zur Zusammenarbeit oder zur Zusammenwirkung von ebenfalls jeweils für sich zertifizierten Systemen eingesetzt wird. Dies erleichtert die sicherheitstechnische Überprüfung und Zertifizierung des so zusammen gestellten Gesamtsystems erheblich. Außerdem wird damit die Wiederverwertbarkeit von Software, insbesondere der Umsetzungskomponente, wesentlich vereinfacht und somit ökonomisch günstiger. Bereits zertifizierte sicherheitsgerichtete Komponenten können unverändert weiter betrieben werden.

Ein Ausführungsbeispiel des erfindungsgemäßen Verfahrens wird nachfolgend anhand der Zeichnungen erläutert. Dies ist gleichzeitig eine Erläuterung der erfindungsgemäßen Vorrichtung.

Dabei zeigen:
- Figur 1: eine schematische Darstellung des Datenflusses zwischen zwei unterschiedlichen Sicherheitskonzepten, und
- Figur 2: ein Ausführungsbeispiel für die Umcodierung von Daten zwischen den verschiedenen Codierungskonzepten.

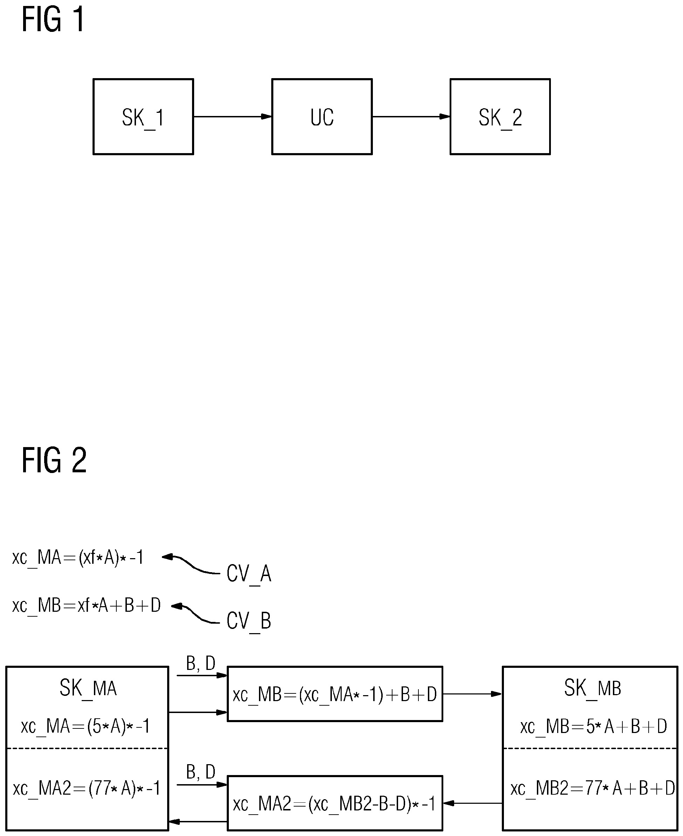

In der Figur 1 ist schematisch eine Struktur dargestellt, bei der ein sicherheitsgerichteter Programmteil, bspw. einer industriellen Automatisierungskomponente, mit einem ersten Sicherheitskonzept SK_1 mit einem zweiten sicherheitsgerichteten Programmteil mit dem Sicherheitskonzept SK_2 zusammenarbeiten muss. Bspw. kann der erste sicherheitsgerichtete Programmteil nach SIL 2 (Safety Integrity Level 2) entwickelt werden, das Sicherheitskonzept SK_2 aber gemäß SIL 3 (Safety Integrity Level 3) eingerichtet sein. Dabei setzt eine Umsetzungskomponente UC die Daten, die gemäß Sicherheitskonzept SK_1 codiert sind, für eine Übertragung zu der zweiten Komponente in die zweite Codierung gemäß dem Sicherheitskonzept SK_2 um.

Selbstverständlich kann dieselbe Umsetzungskomponente UC, aber auch eine weitere, nicht dargestellte Umsetzungskomponente, die Daten auch für den umgekehrten Weg zurückübersetzen von der Codierung in dem Sicherheitskonzept SK_2 in die Codierung, die in der ersten Komponente mit dem Sicherheitskonzept SK_1 verwendet wird.

In der Figur 2 ist ein konkretes Beispiel für die Umcodierung für ein fehlersicheres Datum gezeigt. Dabei sei angenommen, dass eine erste Komponente (durch den linken Block visualisiert) mit einem Sicherheitskonzept SK_MA ("Sicherheitskonzept Manufacturer A") arbeitet, und eine zweite Komponente (in der Figur 2 durch den rechten Block symbolisiert) mit einem Sicherheitskonzept SK_MB ("Sicherheitskonzept Manufacturer B"). Während das Sicherheitskonzept SK_MB eine ANBD-Codierung gemäß der Codierungsvorschrift CV_A verwendet, sieht das Sicherheitskonzept SK_MA die Verwendung eines invertierten AN-Codes mit der Codierungsvorschrift CV_B vor.

In der Figur 2 sind im oberen Teil der Figur die Codiervorschrift CV_A eines Herstellers A mit dem Sicherheitskonzept SK_MA und die Codiervorschrift CV_B eines Herstellers B mit dem Sicherheitskonzept SK_MB gezeigt. Dazu zeigt die Figur 2 im unteren Teil in den drei Blöcken als Beispiel die Codierung eines Datums mit dem Wert "5" und eines Datums mit dem Wert "77". In der oberen Gleichung in dem Block mit dem Sicherheitskonzept SK_MA wird der Wert "5" gemäß der Codierungsvorschrift CV_A mit einem Faktor A multipliziert und danach invertiert (Multiplikation mit -1). Während in der ANBD-Codierung gemäß der Codierungsvorschrift CV B drei Codierungsparameter A, B, D verwendet werden, genügt im Sicherheitskonzept SK_MA mit der Codierungsvorschrift CV_A ein Faktor A; zusätzlich wird noch invertiert.

Die beiden mittleren Blöcke in der Figur 2 zeigen die Verarbeitungsschritte in der Umsetzungskomponente, wobei der obere Block den Weg vom Sicherheitskonzept SK_MA zum Sicherheitskonzept SK_MB zeigt, und der untere Block den umgekehrten Weg. Für den Weg von dem Sicherheitskonzept SK_MA zum Sicherheitskonzept SK_MB werden die beiden im Sicherheitskonzept SK_MA unbekannten Parameter B, D der Umsetzungskomponente bekannt gegeben; diese können bspw. aus der Komponente mit dem Sicherheitskonzept SK_MB abgerufen werden. Der Parameter A wird in diesem Ausführungsbeispiel aus dem Sicherheitskonzept SK_MA übernommen; in einer anderen Ausführungsvariante kann jedoch auch ein abweichender Parameter A verwendet werden (analog zu den Parametern B, D). In dem Block der Umsetzungskomponente, der die Umrechnung vom Sicherheitskonzept SK_MA zum Sicherheitskonzept SK_MB bewerkstelligt, ist die entsprechende Umrechnungsvorschrift bzw. Umcodierungsvorschrift dargestellt. Entsprechend ist die hier beispielhaft verwendete Zahl "5" im Block des Sicherheitskonzeptes SK_MB in der oberen Hälfte des Blockes nun in Form einer ANBD-Codierung notiert. Die unteren Teile der Blöcke des Sicherheitskonzeptes SK_MA und SK_MB zeigen zusammen mit der Umrechnungsvorschrift bzw. Umcodierungsvorschrift in der Mitte (unten) analog dazu die Rückcodierung am Beispiel der Zahl "77".

Während das hier gezeigte Ausführungsbeispiel in erster Linie auf unterschiedlich ausgeführte codierte Verarbeitung (coded processing) von sicherheitsgerichteten Automatisierungskomponenten bzw. Programmblöcken für sogenannte "Safety"-Automatisierungskomponenten gerichtet ist, kann in analoger Weise auch eine Umsetzung zwischen Sicherheitskonzepten bei der sicherheitsgerichteten Datenübertragung (bspw. Protokoll PRO-FIsafe) bewerkstelligt werden. Wesentlich ist, dass die Verwendung der Umsetzungskomponente UC keine Anpassung in den beteiligten Systemen bedingt; diese Systeme arbeiten mittels der Umsetzungskomponente UC mit anderen Systemen in der gleichen Weise zusammen, als hätten diese anderen Systeme dasselbe Sicherheitskonzept und dieselbe Art der Datencodierung. Insbesondere ist es nicht notwendig, etwaige bereits vorhandene Zertifizierungen dieser beteiligten Systeme zu erneuern, da deren Funktionsweise, Schnittstellen und Programmierung nicht geändert werden müssen.

Weiterhin ist es mit dem gezeigten Konzept möglich, auch "systemfremde" sicherheitsgerichtete Komponenten in eine Anlage oder in ein Netzwerk zu integrieren, welches bislang ausschließlich mit einem einzigen, einheitlichen Sicherheitskonzept mit einer einheitlichen sicherheitsgerichteten Codierung von Daten gearbeitet hat. In verteilten Netzen kann vorteilhaft die Umsetzungskomponente UC auch als ein zentraler Netzwerkdienst ausgestaltet sein.

Mit dem gezeigten Konzept ist es möglich, mehrere Sicherheitskonzepte in einem Netzwerk und sogar auf einem einzigen Prozessor auszuführen. Bspw. können auf einer Automatisierungskomponente Funktionsbausteine nach dem Konzept "Step 7 Klassik" arbeiten, und daneben gleichzeitig und damit kommunikativ über die Umsetzungskomponente UC verbunden Programmbausteine nach einem anderen Konzept. Es kann eine Kompatibilität zwischen verschiedenen Konzepten gewährleistet werden, dabei bleibt eine bereits abgenommene Funktion erhalten und muss nicht neu zertifiziert werden. Es entsteht fallweise auch eine Entkopplung zwischen dem sicherheitsgerichteten System (F-System) und den daran angeschlossenen abhängigen Einheiten (F-Clients). Ein gegenseitiges "Wissen" über das jeweilige Sicherheitskonzept und Codierungsvorschriften des jeweiligen Partners ist nicht notwendig. Eine Weiterentwicklung von sicherheitsgerichteten Systemen (F-Systems) ist möglich, ohne eine Rückwirkung auf die "Clients" auszuüben.

## Patentansprüche

1. Verfahren zum Datenaustausch zwischen zwei Systemen (SK_1, SK_2) mit verschiedenen Sicherheitskonzepten für eine funktionale Sicherheit,
wobei in einem ersten der Systeme (SK_1) zur Codierung von Daten eine erste Codiervorschrift (CV_A) verwendet wird,
und wobei in einem zweiten der Systeme (SK_2) zur Codierung der Daten eine zweite Codiervorschrift (CV_B) verwendet wird, **dadurch gekennzeichnet,**
**dass** für den Datenaustausch zwischen dem ersten und dem zweiten System (SK_1, SK_2) eine Umsetzungskomponente (UC) vorgesehen wird,
wobei mittels der Umsetzungskomponente (UC) die mittels der ersten Codiervorschrift (CV_A) codierten Daten vor einer Übermittlung von dem ersten System (SK_1)zu dem zweiten System (SK_2) in eine Darstellung gemäß der zweiten Codiervorschrift (CV_B) umcodiert werden, und umgekehrt.

2. Verfahren nach Patentanspruch 1,
**dadurch gekennzeichnet,**
**dass** als eines der Systeme (SK_1, SK_2) eine industrielle Automatisierungskomponente nach IEC 61508 mit einer Codierung der Daten gemäß erster oder zweiter Codiervorschrift (CV_A, CV_B) verwendet wird.

3. Verfahren nach Patentanspruch 2,
**dadurch gekennzeichnet,**
**dass** als die Umsetzungskomponente (UC) ein separates Programmmodul der industriellen Automatisierungskomponente vorgesehen wird.

4. Verfahren nach einem der vorhergehenden Patentansprüche,
**dadurch gekennzeichnet,**
**dass** als die Umsetzungskomponente (UC) ein zwischen dem ersten und dem zweiten System (SK_1, SK_2) angeordneter Proxy-server mit einer Umsetzungssoftware und Datenschnittstellen zu dem ersten und dem zweiten System (SK_1, SK_2) verwendet wird.

5. Verfahren nach einem der vorhergehenden Patentansprüche,
**dadurch gekennzeichnet,**
**dass** als die Umsetzungskomponente (UC) ein Software-Baustein für eine Netzwerkkomponente, insbesondere für einen Router oder einen Switch in der industriellen Kommunikation, verwendet wird.

6. Verfahren nach einem der vorhergehenden Patentansprüche,
**dadurch gekennzeichnet,**
**dass** das erste System und das zweite System (SK_1, SK_2) und die Umsetzungskomponente (UC) auf derselben Hardware-Plattform, insbesondere einer sicherheitsgerichteten industrielle Automatisierungskomponente, installiert werden.

7. Verfahren nach einem der vorhergehenden Patentansprüche,
**dadurch gekennzeichnet,**
**dass** als die Umsetzungskomponente (UC) eine zertifizierte Komponente verwendet wird, deren Funktionalität nach Abschluss der Zertifizierung gegen Manipulation geschützt ist.

8. Verfahren nach einem der vorhergehenden Patentansprüche,
**dadurch gekennzeichnet,**
**dass** die Umsetzungskomponente (UC) als eine sicherheitsgerichtete Automatisierungskomponente nach IEC 61508 ausgeführt ist.

9. Verfahren nach einem der vorhergehenden Patentansprüche,
**dadurch gekennzeichnet,**
**dass** die Umsetzungskomponente (UC) zur Umsetzung von Datenpaketen in einem Netzwerk für sicherheitsgerichtete Kommunikation zwischen zwei unterschiedlichen Safety-Kommunikationsprotokollen eingesetzt wird,
wobei ein erstes Safety-Kommunikationsprotokoll mit der ersten Codiervorschrift (CV_A) und ein zweites Safety-Kommunikationsprotokoll mit der zweiten Codiervorschrift (CV_B) zur Codierung der transportierten Daten eingesetzt wird.

10. Verfahren nach Patentanspruch 9,
**dadurch gekennzeichnet,**
**dass** als die erste oder die zweite Codiervorschrift für die sicherheitsgerichtete Kommunikation das Profi-Safe-Protokoll verwendet wird.

11. Umsetzungskomponente (UC) für den Datenaustausch zwischen zwei Systemen (SK_1, SK_2) mit verschiedenen Sicherheitskonzepten für funktionale Sicherheit,
wobei in einem ersten der Systeme (SK_1) zur Codierung von Daten eine erste Codiervorschrift (CV_A) verwendet wird,
und
wobei in einem zweiten der Systeme (SK_2) zur Codierung der Daten eine zweite Codiervorschrift (CV_B) verwendet wird, **dadurch gekennzeichnet,**
**dass** für den Datenaustausch zwischen dem ersten und dem zweiten System (SK_1, SK_2) eine Umsetzungskomponente (UC) vorgesehen ist,
wobei die Umsetzungskomponente (UC) zur Umcodierung der mittels der ersten Codiervorschrift codierten Daten vor einer Übermittlung von dem ersten System (SK_1) zu dem zweiten System (SK_2) in eine Darstellung gemäß der zweiten Codiervorschrift (CV_B) eingerichtet ist, und umgekehrt.

12. Umsetzungskomponente (UC) nach Patentanspruch 11,
**dadurch gekennzeichnet,**
**dass** die Umsetzungskomponente (UC) als ein separates Programmmodul der industriellen Automatisierungskomponente ausgeführt ist.

13. Umsetzungskomponente (UC) nach einem der Patentansprüche 11 und 12,
**dadurch gekennzeichnet,**
**dass** die Umsetzungskomponente (UC) ein zwischen dem ersten und dem zweiten System (SK_1, SK_2) angeordneter Proxyserver mit einer Umsetzungssoftware und Datenschnittstellen zu dem ersten und dem zweiten System (SK_1, SK_2) ist.

14. Umsetzungskomponente (UC) nach einem der Patentansprüche 11 bis 13,
**dadurch gekennzeichnet,**
**dass** die Umsetzungskomponente (UC) ein Software-Baustein für eine Netzwerkkomponente, insbesondere für einen Router oder einen Switch in der industriellen Kommunikation, ist.

15. Umsetzungskomponente (UC) nach einem der Patentansprüche 11 bis 14,
**dadurch gekennzeichnet,**
**dass** das erste System und das zweite System (SK_1, SK_2) und die Umsetzungskomponente (UC) auf derselben Hardware-Plattform, insbesondere eine sicherheitsgerichtete industrielle Automatisierungskomponente, installiert sind.

16. Umsetzungskomponente (UC) nach einem der Patentansprüche 11 bis 15,
**dadurch gekennzeichnet,**
**dass** die Umsetzungskomponente (UC) eine zertifizierte Komponente ist, deren Funktionalität nach Abschluss der Zertifizierung gegen Manipulation geschützt ist.

17. Umsetzungskomponente (UC) nach einem der Patentansprüche 11 bis 16,
**dadurch gekennzeichnet,**
**dass** die Umsetzungskomponente (UC) als eine sicherheitsgerichtete Automatisierungskomponente nach IEC 61508 ausgeführt ist.

18. Umsetzungskomponente (UC) nach einem der Patentansprüche 11 bis 17,
**dadurch gekennzeichnet,**
**dass** die Umsetzungskomponente (UC) zur Umsetzung von Datenpaketen in einem Netzwerk für sicherheitsgerichtete Kommunikation zwischen zwei unterschiedlichen Safety-Kommunikationsprotokollen eingesetzt ist,
wobei ein erstes Safety Kommunikationsprotokoll mit der ersten Codiervorschrift (CV_A) und ein zweites Safety-Kommunikationsprotokoll mit der zweiten Codiervorschrift (CV_B) zur Codierung der transportierten Daten vorgesehen ist.
